# EUROPÄISCHE PATENTSCHRIFT

(11) **EP 1 715 031 B1**
(45) Veröffentlichungstag und Bekanntmachung des Hinweises auf die Patenterteilung: **27.07.2011**
(21) Anmeldenummer: 06008275.7
(22) Anmeldetag: 21.04.2006
(51) Int. Cl.: C12C 13/02, F25B 30/04

(54) **Verfahren und Vorrichtung zur Bereitstellung von Wasser oder Wasserdampf als Heizmedium bei einem Prozess**
Method and apparatus for providing water or steam as heating medium in a process
Procédé et appareil de préparation d'eau ou de la vapeur comme moyen de chauffage lors d'un procédé

(30) Priorität: 22.04.2005 DE 102005018942
(43) Veröffentlichungstag der Anmeldung: 25.10.2006
(73) Patentinhaber: Kaspar Schulz Brauereimaschinenfabrik & Apparatebauanstalt KG, 96052 Bamberg (DE)
(72) Erfinder: Russ, Winfried, 85405 Nandlstadt (DE); Meyer-Pittroff, Roland, 85354 Freising (DE); Binkert, Jörg, 96149 Breitengüssbach (DE)
(74) Vertreter: Eichstädt, Alfred

(56) Entgegenhaltungen:
- EP-A- 1 666 140
- WO-A-00/27992
- DE-A1- 2 931 854
- DE-A1- 10 237 947
- DE-A1- 10 238 508
- DE-A1- 19 746 437
- DE-U1- 9 311 514

## Beschreibung

Die Erfindung betrifft ein Verfahren und eine Vorrichtung zur Erwärmung eines Produktes.

Bei vielen Prozessen, vor allem auch in der Lebensmittelindustrie, werden Prozesstemperaturen um 100°C (Kochen) benötigt. Die erforderlichen Heizmedien sind Dampf oder Heißwasser mit Temperaturen von 105°C aufwärts. Eine Bereitstellung des Heizmediums erfolgt unter Verwendung von Dampf- oder Heißwasserkesseln. Alternativ dazu können auch heißgekühlte Blockheizkraftwerke zur Bereitstellung des Heizmediums eingesetzt werden. Heißgekühlte Blockheizkraftwerke, bei denen es sich um eine Sonderbauart von Kraft-Wärme-Kopplungs-Anlagen handelt, sind aber etwa ein Drittel teurer als konventionelle Blockheizkraftwerke und benötigen aus wirtschaftlichen Gründen eine Laufzeit von mehr als 50% der maximalen Jahresbenutzungsstunden.

Die oben genannten Prozesstemperaturen werden bei den meisten Prozessen nur über kurze Zeiträume benötigt. Weitere vor- oder nachgeschaltete Prozesse finden oftmals bei geringeren Temperaturen bis maximal 95°C statt.

Beispielsweise wird zum Kochen von Bierwürze beim Brauprozess etwa 60% der zur Bierwürzeherstellung erforderlichen Gesamtwärme benötigt. Die entsprechende Zeitdauer ist aber nur 30 - 45 Minuten, also nur 10% - 20% der Gesamtzeit der Bierwürzeherstellung.

Aus betrieblichen und technischen Gründen wird beim bekannten Stand der Technik das Heizmedium ganztägig auf der maximalen Heiztemperatur gehalten. Dies führt zu entsprechenden Wärmeverlusten im Netz durch die hohen Differenzen zwischen der Außen- und der Innentemperatur.

Ein Einsatz von normalgekühlten Blockheizkraftwerken mit einer maximalen Vorlauftemperatur von 95°C scheitert bei vielen Anwendungen, da ein Parallelbetrieb zweier Heiznetze mit unterschiedlichen Temperaturen nicht wirtschaftlich ist.

Bei der Herstellung vieler Lebensmittel ist auf einen geringen Eintrag an Sauerstoff in das jeweilige Lebensmittel zu achten, weil oxidative Vorgänge oft au einer Qualitätsverschlechterung führen. Bei Wasser bietet es sich an, es zu entgasen. Üblich ist eine Entgasung im Vakuum.

Es ist auch bereits bekannt, eine Abkühlung von Wasser durch eine Teilverdampfung bei einem Druck unterhalb des temperaturabhängigen Sättigungsdruckes, insbesondere in einem Vakuum, durchzuführen.

Weiterhin ist es bereits bekannt, eine Abscheidung von Brüden aus Verdampfungsprozessen durch eine Kondensation und Rückgewinnung der Verdampfungswärme vorzunehmen.

Aus der DE 101 20 902 C2 ist ein Verfahren zur Würzebereitung bei der Bierherstellung bekannt. Bei diesem bekannten Verfahren werden die technologischen Erfordernisse des Würzekochens durch die beiden folgenden Behandlungsschritte erreicht:
- in einem ersten Schritt wird die Würze in einer Würzepfanne mittels Zufuhr von Wärme auf eine knapp unterhalb der Siedetemperatur liegende Temperatur erhitzt und bei dieser Temperatur unter Verwendung eines Regelungssystems, welches lediglich die Abstrahlungsverluste der Würzepfanne ausgleicht, konstant gehalten;
- direkt anschließend an den ersten Schritt oder nach einer Heißtrubabscheidung wird die Würze ohne Zufuhr thermischer Energie in einem zweiten Schritt in einem evakuierten Expansionsbehälter zum Verdampfen gebracht.
Der im Expansionsbehälter gebildete Dampf wird in einem Brüdenkondensator verflüssigt. Dieses aus der DE 101 20 902 C2 bekannte Verfahren ist in der Brauereimaschinenindustrie unter der Bezeichnung Schonkochverfahren bzw. Schokoverfahren bekannt geworden.

Aus der WO 00/27992 A1 ist eine Brauereianlage mit zumindest einem Wärmeverbraucher und einer Beheizungsvorrichtung bekannt. In der Beheizungsvorrichtung ist ein flüssiger Wärmeträger, insbesondere Wasser, mittels eines Mikrowellenerzeugers aufheizbar. Die dabei erzeugte Wärme ist in einem Wärmespeicher speicherbar und mittels zumindest einer Wärmetauschereinheit aus dem Wärmespeicher auskoppelbar. Zusätzlich ist mittels des Mikrowellenerzeugers Würze zur Würzekochung in der Würzepfanne in einem Kochelement aufheizbar.

Aus der EP 1 666 140 A1 ist eine Wärmepumpe bekannt, bei der ein Zeolith enthaltender Adsorber verwendet wird. Dabei generiert das Zeolith zunächst Adsorptionswärme. Anschließend erfolgt eine Desorption des Zeoliths.

Aus der DE 93 11 514 U1 ist ein Heizgerät zur Erwärmung eines Mediums mit einem von den Brenngasen eines Brenners beaufschlagbaren Wärmetauscher zur Erwärmung eines ersten Fluidstromes und mit einem von einem weiteren Fluidstrom zumindest zeitweise durchströmbaren Wärmespeicher bekannt. Der Wärmespeicher ist durch ein mit einem Zeolith gefülltes Gefäß gebildet, das über einen Kondensator mit einem vom ersten Fluidstrom beaufschlagten Verdampfer verbunden ist.

Aus der DE 102 38 508 A1 ist eine Adsorptionswärmepumpe bekannt. Diese weist mindestens ein Wärmepumpen-Modul auf, welches aus einem Adsorber/Desorber, einer Adsorber/Desorber-Zuführleistung stromauf des Adsorbers/Desorbers, einer Adsorber/Desorber-Abführleitung stromab des Adsorbers/Desorbers, einem Gebläse und einem Wärmetauscher zur Übertragung der thermischen Energie des Abgases eines Brenners auf den gasförmigen Wärmeträger in der Adsorber/Desorber-Zuführleitung besteht. Bei dem Adsorber/Desorber handelt es sich vorzugsweise um einen Zeolith-Wärmeaustauscher. Bei dem Brenner handelt es sich vorzugsweise um einen Erdgas-, Flüssiggas- oder Ölbrenner.

Aus der DE 102 37 947 A1 ist ein Regelverfahren für eine Adsorptionswärmepumpe bekannt. Die Adsorptionswärmepumpe ist aus drei Kreisläufen gebildet, nämlich einem Primärkreislauf, einem Sekundärkreislauf und einem Umweltwärmekreislauf. Der Primärkreislauf ist über zwei Zeolith-Module an die beiden anderen Kreisläufe gekoppelt. Des Weiteren ist ein Verbraucherkreislauf vorgesehen, in den die Adsorptionswärmepumpe geschaltet ist.

Aus der DE 2 931 854 ist ein verfahren bekannt, bei dem Würze zunächst mit Frischdampf und danach mit verdichtetem Brüdendampf erlützt wird.

Die Aufgabe der Erfindung besteht darin, ein Verfahren und eine Vorrichtung zur energiesparenden Erwärmung eines Produktes anzugeben.

Diese Aufgabe wird durch ein Verfahren mit den im Anspruch 1 angegebenen Merkmalen gelöst. Vorteilhafte Ausgestaltungen und Weiterbildungen der Erfindung sind in den abhängigen Ansprüchen 2 - 9 angegeben. Der Anspruch 10 hat die Verwendung eines Verfahrens nach einem der Ansprüche 1 - 9 zum Gegenstand. Die Ansprüche 11 - 13 betreffen eine Vorrichtung zur Erwärmung eines Produkts.

Die Vorteile der Erfindung bestehen insbesondere darin, dass die für den Kochprozess benötigte Temperatur in energiesparender Weise durch ein kurzfristig aktivierbares System bereitgestellt wird, nämlich durch Nutzung der Adsorptionswärme eines Adsorbers. Die für vor- oder nachgeschaltete weitere Prozessvorgänge benötigte Energie wird durch die Abwärme einer Abwärmequelle bereitgestellt. Folglich wird das Heizmedium nicht ständig auf der maximalen Heiztemperatur gehalten, sondern nur dann auf diese maximale Heiztemperatur gebracht, wenn dies notwendig ist. Weiterhin kann auf ein Wärmeversorgungssystem, zu welchem Dampf- oder Heißwasserkessel gehören, verzichtet werden. Die Wärmeverluste sinken durch eine Absenkung der Temperatur des Heizmediums um etwa 30%.

Handelt es sich bei der Abwärmequelle um ein Blockheizkraftwerk, dann beträgt der Gesamtwirkungsgrad (thermisch und elektrisch) bezogen auf den verwendeten Brennstoff bis zu 92%. Eine Kesselanlage hat bezogen auf den verwendeten Brennstoff einen Wirkungsgrad von maximal 87%.

Die Laufzeit des Blockheizkraftwerkes ist erhöht, da seine Abwärme auch für zusätzliche thermische Prozesse genutzt werden kann, beispielsweise für Sudhausarbeit und eine Desorption des Adsorbers.

Weiterhin wird im Falle einer Würzeherstellung bei einem Bierbrauprozess keine Nutzkälteleistung aus einer Kälteanlage zur Würzekühlung benötigt.

Weitere vorteilhafte Eigenschaften der Erfindung ergeben sich aus deren beispielhafter Erläuterung anhand der Figur. Diese zeigt eine Blockdarstellung zur Veranschaulichung eines Ausführungsbeispiels für die Erfindung.

Ein Verfahren gemäß der Erfindung kann beispielsweise im Rahmen der Würzebereitung bei einem Bierbrauprozess verwendet werden. Alternative Verwendungsmöglichkeiten sind eine Verwendung bei einem Saftkonzentratherstellungsprozess und eine Verwendung bei einem Kondensmilchherstellungsprozess. Diese vorgenannten Prozesse sind jeweils Aufkonzentrierungsprozesse, denen eine Abkühlung folgt.

Nachfolgend wird ein Ausführungsbeispiel erläutert, bei welchem die Erfindung im Rahmen der Würzebereitung bei einem Bierbrauprozess verwendet wird.

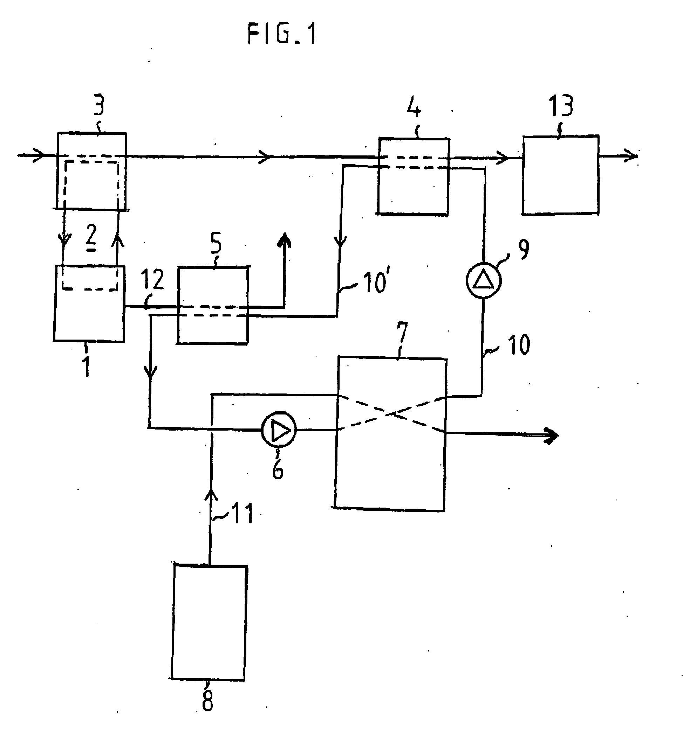

Die Figur 1 zeigt eine Blockdarstellung zur Veranschaulichung eines Ausführungsbeispiels für die Erfindung. Im Rahmen der Würzebereitung bei einem Bierbrauprozess kommt die Würze über ein Maischgefäß und einen Läuterbottich mit einer Temperatur von 72°C an einen ersten Würzeheizer 3. Dort erfolgt eine Vorerwärmung der Würze auf eine Temperatur von 90°C. Die auf 90°C vorerwärmte Würze wird dann an einen zweiten Würzeheizer 4 weitergeleitet und dort weiter erwärmt auf Kochtemperatur oder höher. Die vom zweiten Würzeheizer 4 ausgegebene Würze wird an eine Würzepfanne 13 weitergeleitet, in welcher sie für eine Dauer von 60 Minuten auf Kochtemperatur gehalten wird. Wird dabei zusätzliche Energie benötigt, dann kann diese durch eine Aktivierung eines zusätzlichen Heizkreislaufes über den zweiten Würzeheizer 4 bereitgestellt werden.

Die Vorerwärmung der Würze im ersten Würzeheizer 3 erfolgt mittels der Abwärme einer Abwärmequelle 1, bei der es sich beim gezeigten Ausführungsbeispiel um ein Blockheizkraftwerk handelt. Der erste Würzeheizer 3 ist dabei in den Kühlkreislauf 2 des Blockheizkraftwerks eingebunden.

Die weitere Erwärmung der Würze auf Kochtemperatur oder höher im zweiten Würzeheizer 4 erfolgt durch Nutzung der Adsorptionswärme eines Adsorbers 7. Bei diesem Adsorber handelt es sich vorzugsweise um einen Zeolith-Wärmespeicher. Zeolithe sind Silikat-Minerale, die große Mengen von Wasser adsorbieren können. Bei dieser Adsorption von Wasserdampf oder Wasser aus feuchter Luft erwärmt sich das Zeolith auf deutlich höhere Temperaturen als die des adsorbierten Wassers, da Verdampfungs- und Kristallisationswärme des Wassers frei werden. Die Temperatur des Zeoliths wird auf Thermoöl übertragen. Das erhitzte Thermoöl gelangt über eine Thermoölleitung 10 und eine Pumpe 9 zum zweiten Würzeheizer 4 und wird dort zur weiteren Erwärmung der Würze verwendet.

Der vom Zeolith-Wärmespeicher 7 benötigte Wasserdampf wird im Rahmen eines Verdunstungskühlprozesses gewonnen, welcher in einem Vakuumverdampfer durchgeführt wird. Bei diesem Vakuumverdampfer 8 kann es sich um einen Expansionsbehälter handeln, wie er in der DE 101 20 902 C2 beschrieben ist. Der vom Vakuumverdampfer 8 zur Verfügung gestellte Wasserdampf wird dem Zeolith-Wärmespeicher 7 über eine Wasserdampfleitung 11 zugeführt.

Nach der Wärmenutzung wird der Zeolith-Wärmespeicher 7 regeneriert, indem das adsorbierte Wasser wieder desorbiert wird. Diese Desorption erfolgt unter Verwendung der Wärme des Rauchgasstromes des Blockheizkraftwerks 1. Der Rauchgasstrom des Blockheizkraftwerks 1, welcher eine Temperatur von 340°C aufweist, wird an einer Abgasleitung 12 bereitgestellt und über diese an einen Wärmeübertrager 5 geleitet. Im Wärmeübertrager 5 erfolgt eine Übertragung der Wärme vom Rauchgasstrom des Blockheizkraftwerks auf das in der Thermoölleitung 10' fließende Thermoöl. Das erwärmte Thermoöl wird über eine Pumpe 6 an den Zeolith-Wärmespeicher 7 weitergeleitet, so dass dort eine Desorption des Zeoliths erfolgen kann. Bei dieser Desorption wird die Wärme des Rauchgasstromes des Blockheizkraftwerks indirekt verwendet, da die Wärme des Rauchgasstromes im Wärmeübertrager 5 auf das in der Thermoölleitung 10' fließende Thermoöl übertragen wird, welches dann seinerseits zur Desorption verwendet wird.

Alternativ zu dem in der Figur 1 gezeigten Ausführungsbeispiel kann im Rahmen der Vorerwärmung der Würze im ersten Würzeheizer 3 auch die Abwärme einer anderen Abwärmequelle verwendet werden, beispielsweise die Abwärme von parallel laufenden und räumlich benachbarten thermischen Prozessen.

Weiterhin kann alternativ zu dem in der Figur 1 gezeigten Ausführungsbeispiel der zur Adsorption im Adsorber 7 benötigte Wasserdampf auch im Rahmen eines anderen Koch- oder Verdampfungsprozesses gewonnen werden.

Der genannte Verdampfungsprozess findet vorzugsweise bei einem Druck unterhalb des temperaturabhängigen Sättigungsdruckes statt, um ein gleichzeitiges Entgasen oder ein Verdampfen bei niedrigen Temperaturen zu gewährleisten.

Eine weitere Alternative zu dem in der Figur 1 gezeigten Ausführungsbeispiel besteht darin, die Desorption des Zeolith-Wärmespeichers direkt durch die Wärme des Rauchgasstromes des Blockheizkraftwerks vorzunehmen. Bei diesem alternativen Ausführungsbeispiel wird der Rauchgasstrom des Blockheizkraftwerks direkt über ein oder mehrere Ventile dem Zeolith-Wärmespeicher zugeleitet.

Ein Vorteil der Erfindung besteht darin, dass im Falle einer Verwendung eines Blockheizkraftwerks als Abwärmequelle die Benutzungsstundendauer des Blockheizkraftwerks im Vergleich zum Stand der Technik erhöht ist, so dass die Wirtschaftlichkeit des Blockheizkraftwerks verbessert ist. Dies ist darauf zurückzuführen, dass die Grundversorgung mit Wärme beispielsweise mit einer Vorlauftemperatur von 95°c vorgenommen wird. Damit können bei einem Bierbrauprozess die thermischen Grundoperationen Pasteurisieren, Reinigen und Maischen versorgt werden.

Eine besonders vorteilhafte Ausgestaltung der Erfindung besteht darin, im Rahmen der Würzebereitung die Bierwürze nicht bei Atmosphärendruck zu kochen, sondern nach dem oben genannten Schoko-Verfahren der Anmelderin. Gemäß diesem Schoko-Verfahren erfolgt der Würzekochvorgang in der Würzepfanne 13 im Sinne eines Heißhaltens der Würze für eine Zeitdauer von 60 Minuten bei 99°C. Zu diesem Heißhalten kann eine gute Isolierung der Würzepfanne ausreichend sein. Gegebenenfalls kann zum Ausgleich von Abstrahlungsverlusten benötigte Heizenergie durch eine Aktivierung eines zusätzlichen Heizkreislaufes über den zweiten Würzeheizer 4 bereitgestellt werden. Anschließend wird die Würze direkt oder über einen Whirlpool an den Vakuumverdampfer 8 weitergegeben, in welchem ein Ausdampfen bei einem Druck unterhalb des temperaturabhängigen Sättigungsdruckes erfolgt.

Bei dieser besonders vorteilhaften Ausgestaltung der Erfindung entstammt der zur Adsorption benötigte Dampf einer Vakuumkühlung der kalten Brauwasserreserve. Diese wird um etwa 10°C abgekühlt. Dabei werden 17g/kg Wasser verdampft. Durch die Adsorption des Dampfes am Zeolith werden 3000KJ pro kg adsorbiertes Wasser frei. Der spezifische Wassergehalt von Zeolith wird um 0,07kg Wasser/kg Zeolith erhöht. Ausgehend von einer Desorption unter Atmosphärendruck bei 320°C entspricht dies bei 8mbar einer Wärme von 210KJ/kg Zeolith , welche im Temperaturbereich von 110 - 165°C frei wird.

Das Ausdampfen erfolgt ebenfalls, aber zu anderen Zeiten, im Vakuumverdampfer 8, welcher beim Schoko-Verfahren ansonsten zur Würzeausdampfung verwendet wird. Durch die im Vakuumverdampfer 8 erfolgende Filmverdampfung werden gleichzeitig im Wasser gelöste Gase teilweise in die Dampfphase überführt. Nach der Adsorption des Wasserdampfes werden diese Gase durch eine Vakuumpumpe entfernt. Das entgaste Wasser ist aufgrund seines niedrigen Sauerstoffgehaltes besonders für den Brauprozess geeignet. Dieses kalte Wasser wird im Gegenstrom zur Abkühlung der Würze nach der Ausdampfung genutzt.

Beim Stand der Technik muss die Abkühlung der Würze zweistufig erfolgen. Dabei erfolgt die erste Stufe mit Wasser von etwa 15°C aus der Brauwasserreserve. Die im Rahmen der zweiten Stufe erfolgende weitere Abkühlung erfolgt mit Eiswasser oder Sole durch eine Kälteanlage.

Im Unterschied dazu hat bei der beschriebenen besonders vorteilhaften Ausgestaltung der Erfindung die Brauwasserreserve durch die Vakuumkühlung bereits eine Temperatur von 5°C, so dass eine zweite Abkühlstufe nicht notwendig ist.

Gemäß der vorliegenden Erfindung wird nach alledem ein Verfahren zur Würzebereitung bereitgestellt, bei welchem eine Prozesswärmebereitstellung mit Hilfe eines Blockheizkraftwerkes erfolgt, welches damit eine wirtschaftlich sinnvolle Zahl an Betriebsstunden pro Jahr aufweist, und bei welchem die für das Würzekochen bzw. Würzeschonkochen notwendige Temperatur über ein kurzfristig aktivierbares System, bei welchem die Adsorptionswärme eines Adsorbers genutzt wird, erreicht wird. Insbesondere wird durch das Blockheizkraftwerk eine Vorerwärmung der Würze auf eine Temperatur von 90°C durchgeführt. Danach wird die für das Würzekoch- oder Schonkochverfahren benötigte Temperatur durch Nutzung der Adsorptionswärme eines Adsorbers, insbesondere eines Zeolith-Wärmespeichers, erreicht und gehalten. Das mit Wasser beladene Zeolith wird vorzugsweise unter Verwendung des Rauchgasstromes des Blockheizkraftwerks regeneriert. Die Desorption erfolgt bei Atmosphärendruck bei Temperaturen von 320°C oder höher. Der dabei frei werdende Wasserdampf wird mit den Rauchgasen in einem dem Blockheizkraftwerk zugeordneten Wärmeübertrager abgekühlt und ggf. kondensiert. Steht eine Wärmesenke zur Verfügung, dann kann die Desorption auch bei Unterdruck erfolgen.

Das Blockheizkraftwerk wird beispielsweise mit Pflanzenöl oder Altspeisefett betrieben.

Ein weiterer Vorteil der Erfindung besteht darin, dass die Desorption des Adsorbers, die unter Verwendung des Abgasstromes des Blockheizkraftwerks vorgenommen wird, zeitlich und räumlich unabhängig vom eigentlichen Würzebereitungsprozess erfolgen kann.

### Bezugszeichenliste:

- 1: Abwärmequelle
- 2: Kühlkreislauf der Abwärmequelle
- 3: erster Würzeheizer
- 4: zweiter Würzeheizer
- 5: Wärmeübertrager
- 6: Pumpe
- 7: Adsorber
- 8: Vakuumverdampfer
- 9: Pumpe
- 10: Thermoölleitung
- 11: Wasserdampfleitung
- 12: Abgasleitung
- 13: Würzepfanne

## Patentansprüche

1. Verfahren zur Erwärmung eines Produktes mit folgenden Schritten:
- Vorerwärmung des Produktes mittels der Abwärme einer Abwärmequelle (1),
- weitere Erwärmung des Produktes auf Kochtemperatur oder höher durch Nutzung der Adsorptionswärme eines Adsorbers (7) und
- Desorption des Adsorbers (7) mittels der Abwärme der Abwärmequelle (1).

2. Verfahren nach Anspruch 1, **dadurch gekennzeichnet, dass** die Adsorption durch Anlagerung von Wasserdampf an den Adsorber erfolgt.

3. Verfahren nach Anspruch 2, **dadurch gekennzeichnet, dass** der Wasserdampf im Rahmen eines Verdunstungskühlprozesses gewonnen wird.

4. Verfahren nach Anspruch 3, **dadurch gekennzeichnet, dass** der Wasserdampf durch Verdunstung in einem Vakuum gewonnen wird.

5. Verfahren nach Anspruch 4, **dadurch gekennzeichnet, dass** die Vakuumkühlung gleichzeitig zur Entgasung von Brauwasser verwendet wird.

6. Verfahren nach Anspruch 2, **dadurch gekennzeichnet, dass** der Wasserdampf im Rahmen eines Kochoder Verdampfungsprozesses gewonnen wird.

7. Verfahren nach einem der vorhergehenden Ansprüche, **dadurch gekennzeichnet, dass** die Desorption des Adsorbers unter Verwendung der Wärme des Rauchgasstromes eines Blockheizkraftwerks erfolgt.

8. Verfahren nach Anspruch 7, **dadurch gekennzeichnet, dass** die Desorption des Adsorbers direkt unter Verwendung der Wärme des Rauchgasstromes des Blockheizkraftwerks erfolgt.

9. Verfahren nach Anspruch 7, **dadurch gekennzeichnet, dass** die Desorption des Adsorbers indirekt unter Verwendung der Wärme des Rauchgasstromes des Blockheizkraftwerks erfolgt.

10. Verwendung eines Verfahrens nach einem der vorhergehenden Ansprüche bei einem Bierwürzeherstellungsprozess, einem Saftkonzentratherstellungsprozess oder einem Kondensmilchherstellungsprozess.

11. Vorrichtung zur Erwärmung eines Produktes, mit
- einem ersten Wärmeübertrager (3),
- einem stromab des ersten Wärmeübertragers (3) angeordneten zweiten Wärmeübertrager (4),
- einem mit dem zweiten Wärmeübertrager (4) gekoppelten Adsorber (7) und
- einer mit dem ersten Wärmeübertrager (3) und dem Adsorber (7) gekoppelten Abwärmequelle (1),
**dadurch gekennzeichnet, dass** die Abwärmequelle (1) ein Blockheizkraftwerk ist, der erste Wärmeübertrager (3) in den Kühlkreislauf (2) des Blockheizkraftwerks eingebunden ist und der Adsorber entweder mit einer den Rauchgasstrom führenden Abgasleitung (12) des Blockheizkraftwerks direkt über ein oder mehrere Ventile verbunden oder mit einer den Rauchgasstrom führenden Abgasleitung (12) des Blockheizkraftwerkes über einen dritten Wärmeübertrager (5) gekoppelt ist.

12. Vorrichtung nach Anspruch 11, **dadurch gekennzeichnet, dass** der Adsorber (7) ein Zeolith-Wärmespeicher ist.

13. Vorrichtung nach Anspruch 11 oder 12, **dadurch gekennzeichnet, dass** sie einen Vakuumverdampfer (8) aufweist, der mit dem Adsorber (7) verbunden ist.

## Claims

1. Method of heating a product, comprising the following steps:
- preheating the product by means of the waste heat of a waste heat source (1),
- further heating the temperature of the product to boiling temperature or higher by use of the adsorption heat of an adsorber (7) and
- desorption of the adsorber (7) by means of the waste heat of the waste heat source (1).

2. Method according to claim 1, **characterised in that** the adsorption is carried out by addition of water steam to the adsorber.

3. Method according to claim 2, **characterised in that** the water steam is obtained within the scope of an evaporative cooling process.

4. Method according to claim 3, **characterised in that** the water steam is obtained by evaporation in a vacuum.

5. Method according to claim 4, **characterised in that** the vacuum cooling is used at the same time for degassification of soda water.

6. Method according to claim 2, **characterised in that** the water steam is obtained within the scope of a boiling or an evaporation process.

7. Method according to any one of the preceding claims, **characterised in that** the desorption of the adsorber is carried out with use of the heat of the flue gas flow of a cogeneration system.

8. Method according to claim 7, **characterised in that** the desorption of the adsorber is carried out directly with use of the heat of the flue gas flow of the cogeneration system.

9. Method according to claim 7, **characterised in that** the desorption of the adsorber is carried out indirectly with use of the heat of the flue gas flow of the cogeneration system.

10. Use of a method according to any one of the preceding claims in a wort production process, a juice concentrate production process or a condensed milk production process.

11. Device for heating a product, comprising
- a first heat transfer means (3),
- a second heat transfer means (4) arranged downstream of the first heat transfer means (3),
- an adsorber (7) coupled with the second heat transfer means (4) and
- a waste heat source (1) coupled with the first heat transfer means (3) and the adsorber (7),
**characterised in that** the waste heat source (1) is a cogeneration system, the first heat transfer means (3) is incorporated in the cooling circuit (2) of the cogeneration system and the adsorber is either connected with an exhaust gas duct (12), which conducts the flue gas flow, of the cogeneration system directly by way of one or more valves or is coupled with an exhaust gas duct (12), which conducts the flue gas flow, of the cogeneration system by way of a third heat transfer means (5).

12. Device according to claim 11, **characterised in that** the adsorber (7) is a zeolite heat store.

13. Device according to claim 11 or 12, **characterised in that** it comprises a vacuum evaporator (8) which is connected with the adsorber (7).

## Revendications

1. Procédé de chauffage d'un produit, comprenant les étapes suivantes :
- préchauffage du produit à l'aide de la chaleur perdue d'une source de chaleur perdue (1),
- poursuite du chauffage du produit à la température de cuisson ou supérieure en utilisant la chaleur d'adsorption d'un adsorbant (7) et
- désorption de l'adsorbant (7) à l'aide de la chaleur perdue de la source de chaleur perdue (7).

2. Procédé selon la revendication 1, **caractérisé en ce que** l'adsorption est effectuée par fixation par addition de vapeur d'eau sur l'adsorbant.

3. Procédé selon la revendication 2, **caractérisé en ce que** la vapeur d'eau est obtenue dans le cadre d'un processus de refroidissement par évaporation.

4. Procédé selon la revendication 3, **caractérisé en ce que** la vapeur d'eau est obtenue par évaporation dans un vide.

5. Procédé selon la revendication 4, **caractérisé en ce que** le refroidissement dans le vide est utilisé en même temps que le dégazage de l'eau à brasser.

6. Procédé selon la revendication 2, **caractérisé en ce que** la vapeur d'eau est obtenue dans le cadre d'un processus de cuisson ou d'évaporation.

7. Procédé selon l'une quelconque des revendications précédentes, **caractérisé en ce que** la désorption de l'adsorbant est effectuée en utilisant la chaleur du flux de gaz de fumée d'une centrale thermique en montage bloc avec chauffage à distance.

8. Procédé selon la revendication 7, **caractérisé en ce que** la désorption de l'adsorbant est directement effectuée en utilisant la chaleur du flux de gaz de fumée de la centrale thermique en montage bloc avec chauffage à distance.

9. Procédé selon la revendication 7, **caractérisé en ce que** la désorption de l'adsorbant est indirectement effectuée en utilisant la chaleur du flux de gaz de fumée de la centrale thermique en montage bloc avec chauffage à distance.

10. Utilisation d'un procédé selon l'une quelconque des revendications précédentes pour un processus de production de moût, un processus de production de concentré de jus ou un processus de production de lait concentré.

11. Dispositif de chauffage d'un produit comprenant :
- un premier échangeur de chaleur (3),
- un second échangeur de chaleur (4) disposé en aval du premier échangeur de chaleur (3),
- un adsorbant (7) couplé au second échangeur de chaleur (4) et
- une source de chaleur perdue (1) couplée au premier échangeur de chaleur (3) et à l'adsorbant (7),
**caractérisé en ce que** la source de chaleur perdue (1) est une centrale thermique en montage bloc avec chauffage à distance, le premier échangeur de chaleur (3) est intégré dans le circuit de refroidissement (2) de la centrale thermique en montage bloc avec chauffage à distance et l'adsorbant est couplé à un conduit d'échappement (12) guidant le flux de gaz de fumée de la centrale thermique en montage bloc avec chauffage à distance directement par une ou plusieurs soupapes ou à un conduit d'échappement (12) menant le flux de gaz de fumée de la centrale thermique en montage bloc avec chauffage à distance par un troisième échangeur de chaleur (5).

12. Dispositif selon la revendication 11, **caractérisé en ce que** l'adsorbant (7) est un accumulateur de chaleur à zéolithe.

13. Dispositif selon la revendication 11 ou 12, **caractérisé en ce qu'**il présente un évaporateur à vide (8) relié à l'adsorbant (7).
